# EUROPÄISCHE PATENTSCHRIFT

(11) **EP 4 082 708 B1**
(45) Veröffentlichungstag und Bekanntmachung des Hinweises auf die Patenterteilung: **05.03.2025**
(21) Anmeldenummer: 21171013.2
(22) Anmeldetag: 28.04.2021
(51) Int. Cl.: B23K 9/16, B23K 9/167, B23K 9/173, B23K 9/29, B23K 35/02

(54) **SCHWEISSBRENNER MIT GASKÜHLUNG**
WELDING TORCH WITH GAS COOLING
CHALUMEAU DE SOUDAGE À REFROIDISSEMENT AU GAZ

(43) Veröffentlichungstag der Anmeldung: 02.11.2022
(73) Patentinhaber: Lorch Schweisstechnik GmbH, 71549 Auenwald (DE)
(72) Erfinder: RIMBÖCK, Andreas Eberhard, 71522 Backnang (DE)
(74) Vertreter: Raffay & Fleck

(56) Entgegenhaltungen:
- EP-A1- 1 287 937
- DE-A1- 102004 008 609
- GB-A- 2 539 412
- US-A1- 2003 057 196
- US-A1- 2017 165 780
- US-A1- 2018 304 395

## Beschreibung

Die vorliegende Erfindung betrifft einen Schweißbrenner für das Schutzgasschweißen mit den Merkmalen des Oberbegriffs des Patentanspruchs 1.

Derartige Schweißbrenner sind aus dem Stand der Technik bekannt. Sie werden insbesondere im Bereich des Metall-Inertgas-Schweißens (MIG) und des Metall-Aktivgas-Schweißens (MAG) eingesetzt, können aber auch beim Wolfram-Inertgas-Schweißen (WIG) Verwendung finden. Sie können sowohl beim automatisierten Schweißen, dort oftmals montiert an Schweißrobotersystemen, Verwendung finden als auch im Zusammenhang mit dem manuellen Schweißen, dann in Verbindung mit entsprechenden Handschweißgeräten.

Die beim Schweißvorgang an der Schweißstelle entstehenden hohen Temperaturen werden auch auf den Schweißbrenner übertragen. Der dadurch entstehende Eintrag von Wärmeenergie auf den Schweißbrenner muss, nicht zuletzt zur Schonung und zum Erhalt des Schweißbrenners und seiner Einzelteile, durch geeignete Kühlung abgeführt werden. Dies wird im Stand der Technik grundsätzlich mit zwei möglichen Kühlmedien unternommen, einer Flüssigkühlung bzw. einer Gaskühlung. Es sind dabei auch Systeme bekannt, die gemischt mit sowohl flüssigem als auch gasförmigem Kühlmedium arbeiten. Sofern mit einem gasförmigen Medium gekühlt wird, kann hierzu insbesondere das im Prozess eingesetzte Schutzgas, sei dies ein Inertgas oder ein am Schweißprozess teilhabendes Aktivgas, verwendet werden, so zum Beispiel wie in der US 2018/0304395 A1 (welche den Oberbegriff des Anspruchs 1 offenbart) der GB 2539412 A oder der DE 602 24 140 T2 offenbart. Indem das zugeführte Schutzgas wärmebelastete Elemente des Schweißbrenners umströmt, nimmt es dort eingetragene Wärmeenergie auf und führt diese beim Abströmen in Richtung der Schweißstelle ab. Im vorderen Bereich des Schweißbrenners geschieht dies dadurch, dass die Außenfläche der Kontaktspitze vom Schutzgas umströmt wird. Um hier den Kühleffekt zu verstärken, werden auch in einem vorderen oder Frontabschnitt besonders lang gebildete Kontaktspitzen verwendet.

Während ein flüssiges Kühlmedium in der Regel den Vorteil hat, dass es eine höhere Wärmekapazität aufweist und damit eine bessere Kühlwirkung zeigt, sind mit einem solchen flüssigen Kühlmedium auch Probleme und Nachteile verbunden. Einerseits sind bei dem entsprechenden Schweißgerät bzw. Schweißautomaten in der Medienzuführung neben der Zufuhr von Schweißstrom und Schutzgas jedenfalls als weitere Komponenten eine Kühlflüssigkeitszu- und -rückführung vorzusehen. Des Weiteren kann ein flüssiges Kühlmedium im Innern des Schweißbrenners nur bedingt nah an die besonders thermisch belasteten Elemente, wie insbesondere die Kontaktspitze, die dem Kontaktieren einer Schweißelektrode, wie z.B. eines zugeführten Schweißdrahtes, dient, herangeführt werden, sodass eine Kühlung nicht unmittelbar an dem Ort stattfinden kann, an dem der thermische Eintrag besonders hoch ist. Schließlich ist die Zufuhr eines weiteren, flüssigen, Kühlmediums in den Bereich der Schweißstelle mit einem Risiko behaftet, dass im Falle einer Undichtigkeit dieses Kühlmedium austritt und so Schäden und Nahtfehler verursachen kann. So kann austretendes Kühlwasser zu einem elektrischen Überspringen des Schweißstroms in die Umgebung der Schweißstelle führen; das zu schweißende Werkstück wird in der Regel durch einen Kontakt mit austretender Kühlflüssigkeit wie Wasser unbrauchbar. Demgegenüber hat eine Gaskühlung, insbesondere die Kühlung mit dem ohnedies verwendeten Schutzgas, den Vorteil, dass nicht ein weiteres Medium zugeführt werden muss und dass eine Abdichtung in Richtung der Schweißstelle nicht vorzusehen ist, da das Schutzgas dort ohnehin austreten und zuströmen soll, also ohnedies der Schweißstelle zugeführt wird. Entsprechend sind gasgekühlte Schweißbrenner im Stand der Technik auch weit verbreitet. Häufig wird zur Unterstützung der Kühlwirkung zusätzlich eine Flüssigkühlung eingesetzt, mit der weiter rückwärtig orientierte Bereiche des Schweißbrenners gekühlt werden können, so dass zusätzlich Energie abgeführt und dadurch verhindert werden kann, dass die Kontaktspitze und andere Komponenten des Schweißbrenners in ihren Dimensionen bei höheren Strömen weiter anwachsen müssen, was wiederum die Ergonomie und Einsatzfähigkeit des Schweißbrenners verschlechtern würde.

Das vorstehend bereits erläuterte Problem mit gasgekühlten Schweißbrennern ist dabei jedoch stets, dass die Kühlleistung eines Kühlgases durch die gegenüber einer Kühlflüssigkeit niedrigere Wärmekapazität und damit Aufnahmemöglichkeit von Wärmeenergie geringer ist. Entsprechend müssen hier besondere Anstrengungen unternommen werden, um eine ausreichende Kühlung des Schweißbrenners und insbesondere der hoch thermisch belasteten Komponenten, wie insbesondere der Kontaktspitze und auch der Kontaktspitzenaufnahme, zu gewährleisten.

Bei diesem Bestreben eine Verbesserung zu erreichen, insbesondere eine verbesserte Kühlung der Kontaktspitze und der Kontaktspitzenaufnahme zu erzielen, ist Aufgabe der vorliegenden Erfindung.

Diese Aufgabe wird erfindungsgemäß gelöst durch einen Schweißbrenner für das Schutzgasschweißen mit den Merkmalen des Patentanspruchs 1. Vorteilhafte Ausgestaltungsformen eines solchen erfindungsgemäßen Schweißbrenners werden in den abhängigen Ansprüchen 2 bis 13 vorgeschlagen.

Erfindungsgemäß weist ein Schweißbrenner für das Schutzgasschweißen zunächst einen rückwärtigen Anschluss an eine Medienzuführung auf, die jedenfalls eine Zufuhr von Schutzgas sowie eine Zuleitung von Schweißstrom umfasst.

Diese Medienführung kann auch weitere Medienleitungen enthalten, zum Beispiel eine Zu- und eine Rückleitung einer Kühlflüssigkeit, wenn zusätzlich eine Flüssigkeitskühlung des Schweißbrenners vorgesehen ist, oder auch eine Schweißdrahtzufuhr für einen als abschmelzende Elektrode verwendeten Schweißdraht. Der erfindungsgemäße Schweißbrenner hat weiterhin ein schweißseitiges Vorderende. Er verfügt über eine zur Beaufschlagung mit dem Schweißstrom elektrisch kontaktierte und elektrisch leitende Kontaktspitzenaufnahme, in der eine aus einem elektrisch leitenden Material, wie zum Beispiel Kupfer, gebildet Kontaktspitze lösbar angeordnet ist. Die Kontaktspitze steht dabei mit der Kontaktspitzenaufnahme in elektrisch leitendem Kontakt, sodass der zugeleitete Schweißstrom über die Kontaktspitzenaufnahme an die Kontaktspitze weitergeleitet wird.

Der Schweißbrenner weist des Weiteren einen Gasverteiler auf, der einem gleichmäßigen Verteilen des Schutzgases, insbesondere in Umfangsrichtung, und, typischerweise im Zusammenspiel mit einer Gasdüse des Schweißbrenners, einem Zuleiten des Schutzgases in Richtung des Vorderendes des Schweißbrenners dient. Typischerweise tritt das Schutzgas dann an dem Vorderende des Schweißbrenners nach Art einer die Schweißstelle umgebenden Schutzgassäule aus.

Ein vorderseitiges Ende der in der Kontaktspitzenaufnahme angeordneten Kontaktspitze ist zu dem Vorderende des Schweißbrenners geführt. Ein rückwärtiger Abschnitt der Kontaktspitze ruht in einer Aufnahmeöffnung der Kontaktspitzenaufnahme. Der rückwärtige Abschnitt der Kontaktspitze weist einen sich zu einem rückwärtigen Ende der Kontaktspitze hin verjüngenden Bereich auf, und die Aufnahmeöffnung in der Kontaktspitzenaufnahme verfügt über einen zu dem sich verjüngenden Bereich der Kontaktspitze komplementär geformten Oberflächenabschnitt. Der sich zu dem rückwärtigen Ende der Kontaktspitze hin verjüngende Bereich kann diskontinuierlich sich verjüngend geformt sein, z.B. treppenartig oder gestuft. In einer möglichen Ausgestaltung verjüngt er sich kontinuierlich, z.B. parabelförmig oder konisch, wobei hier dann eine konische Formgebung besonders bevorzugt ist. Der sich verjüngende Bereich der Kontaktspitze und der komplementär geformte Oberflächenabschnitt sind dabei in einer solchen Weise komplementär zueinander geformt, dass die in der Aufnahmeöffnung eingesetzte Kontaktspitze mit ihrem sich verjüngenden Bereich mit dem komplementär geformten Oberflächenabschnitt der Aufnahmeöffnung in engem mechanischen und elektrischen Kontakt steht. Wenn die Kontaktspitze in dem sich verjüngenden Bereich konisch sich verjüngend geformt ist, so weist daher der komplementär geformte Oberflächenabschnitt eine komplementär zu dem konischen Verlauf des Bereichs der Kontaktspitze gebildeten konischen Verlauf auf.

Die Kontaktspitze ist bei solchen Schweißbrennern typischerweise ein Verschleißteil, welches regelmäßig auszuwechseln ist. Sie unterliegt, auch bei allen Anstrengungen zu ihrer Kühlung hohen thermischen Belastungen und wird von hohen elektrischen Strömen durchflossen. Entsprechend ist sie nach einer Anzahl von Schweißzyklen verschlissen und muss ausgewechselt werden. Daher liegt diese Kontaktspitze lösbar in der Kontaktspitzenaufnahme und ist in der Regel so gestaltet, dass sie von der Kontaktspitzenaufnahme einfach gelöst und durch eine frische, in die Kontaktspitzenaufnahme eingesetzte und dort lösbar festgelegte Kontaktspitze ersetzt werden kann. Dabei gibt bei dem erfindungsgemäßen Schweißbrenner die sich verjüngende Form des sich verjüngenden Bereichs der Kontaktspitze in ihrem rückwärtigen Abschnitt, mit dem die Kontaktspitze in der Aufnahmeöffnung der Kontaktspitzenaufnahme liegt, einerseits eine gute mechanische und auch elektrische Kontaktierung vor, da die Kontaktspitze mit ihrem sich verjüngenden Bereich, bei dem es sich z.B. um einen Konus handeln kann, in die komplementär geformte, z.B. komplementär konische, Aufnahmeöffnung eingepresst und so in innigen Kontakt gebracht werden kann. Andererseits erleichtert sie insbesondere ein Lösen der Kontaktspitze, da eine solche Formgebung bei möglichen thermisch ausgelösten Verformungen weniger zum Blockieren neigt, wenn die Kontaktspitze gelöst werden soll.

Das Besondere an dem erfindungsgemäßen Schweißbrenner liegt nun darin, dass in dem komplementär geformten Oberflächenabschnitt der Aufnahmeöffnung wenigstens eine kanalartige Ausnehmung ausgeformt ist, durch welche zwischen der Kontaktspitzenaufnahme und der Kontaktspitze ein Gasführungskanal ausgebildet ist, der einerseits mit der Zufuhr von Schutzgas aus der Medienzuführung und andererseits mit dem Gasverteiler verbunden ist. Durch diesen Gasführungskanal, der insbesondere ausschließlich durch eine in dem komplementär geformten Oberflächenabschnitt der Aufnahmeöffnung gebildete kanalartige Öffnung gebildet sein kann, wird im Betrieb des Schweißbrenners das zugeführte Schutzgas geleitet, bevor es dann weiter zu dem Gasverteiler strömt und von da aus in Richtung der Schweißstelle geführt wird, dort unter Ausbildung der Schutzgassäule entweicht. Durch diese Maßnahme ist das Schutzgas in dem rückwärtigen Bereich der Kontaktspitze, die beim bekannten Stand der Technik in der Regel fest in der Aufnahmeöffnung der Kontaktspitzenaufnahme aufgenommen liegt und dort keine gesonderte Kühlung durch das Schutzgas erfährt, in innigem Kontakt mit dem Material der Kontaktspitze und kann so dorthin übertragene Wärmeenergie aufnehmen und abführen. Beim weiteren Voranströmen überstreicht das Schutzgas dann auch einen vorderen Abschnitt der Kontaktspitze, der in Richtung des Vorderendes des Schweißbrenners gelegen ist, und führt auch dort zu einer Kühlwirkung. Entsprechend ist also mit dieser erfindungsgemäßen Lösung eine verbesserte Kühlwirkung der gasgekühlten Kontaktspitze erzielt, da diese über einen weiteren Bereich ihrer axialen Erstreckung von dem als Kühlmedium dienenden Schutzgas überstrichen wird, bzw. mit dem Schutzgas in innigem Kontakt steht. Der Stromübertrag auf die Kontaktspitze, die ebenfalls in dem sich verjüngenden Bereich stattfindet, in dem der wenigstens eine Gasführungskanal ausgebildet ist, wird durch die durch den wenigstens einen Gasführungskanal gebildete Unterbrechung der Kontaktfläche nicht beeinträchtigt, insbesondere da sie weiterhin ausreichend groß dimensioniert werden kann. Außerhalb des wenigstens einen Gasführungskanals ist bzw. sind sich sowohl in Längsrichtung der Kontaktspitze erstreckende, als auch in deren Umfangsrichtung reichende Kontaktflächen mit ausreichender Fläche gebildet, die einerseits den mechanischen Halt, andererseits insbesondere den Übertrag des erforderlichen Schweißstroms auf die Kontaktspitze gewährleisten. Es gilt an dieser Stelle zu betonen, dass der gebildete Gasführungskanal weder in seiner Orientierung bezogen auf eine Längsachse noch in seiner Querschnittsform beschränkt ist. Er kann in Längsrichtung der Kontaktspitze verlaufen oder auch schräg dazu, z.B. spiralförmig. Auch ein verzweigter Verlauf ist denkbar. Ebenso kann er einen eckigen oder abgerundeten Querschnitt aufweisen, z.B. rechteckig, dreieckig, polygonal, (teil-)kreisförmig oder auch (teil-) ellipsenförmig oder dergleichen. Wesentlich ist allein, dass dieser Gasführungskanal das von der Gaszufuhr her anströmende Schutzgas dergestalt in Richtung des Gasverteilers leitet, dass dieses eine Kühlung insbesondere der Kontaktspitze, ggf. aber auch anderer Komponenten, an denen es vorbeistreicht, bewirkt.

Mit Vorteil kann für den erfindungsgemäßen Schweißbrenner vorgesehen sein, dass eine elektrische Kontaktierung der Kontaktspitze in dem rückwärtigen Abschnitt ausschließlich über eine Mantelfläche der Kontaktspitze in dem sich verjüngenden Bereich erfolgt, die an den komplementär geformten Oberflächenabschnitt der Aufnahmeöffnung anliegt. Eine Übertragung des Schweißstroms über die Mantelfläche ist mit einer ausreichend großen Kontaktfläche möglich, sodass insbesondere ein rückseitiges Stirnende der Kontaktspitze nicht an einem elektrisch leitenden Teil anstoßen oder anliegen muss. Eine solche Konzeption schließt einen Stromübertrag in einem anderen Abschnitt der Kontaktspitze, z.B. in einem Verbindungsabschnitt allerdings nicht aus. Insbesondere kann nach einer weiteren vorteilhaften Ausgestaltung bei dem erfindungsgemäßen Schweißbrenner eine rückwärtige Stirnfläche der in der Kontaktspitzenaufnahme angeordneten und festgelegten Kontaktspitze ohne Kontakt mit einem weiteren Element freiliegen. Insbesondere kann so auch verhindert werden, dass es im Gebrauch zu einem Festsetzen der rückwärtigen Stirnfläche der Kontaktspitze an einer solchen, ansonsten benötigten, Kontaktfläche in der Kontaktspitzenaufnahme oder einem angrenzenden Teil kommt, was wiederum ein Lösen der Kontaktspitze aus dem Schweißbrenner für ein Austauschen einer verschlissenen Kontaktspitze gegen eine frische Kontaktspitze erschwert, schlimmstenfalls sogar verhindert.

Für eine weitergehend verbesserte Kühlwirkung kann vorgesehen sein, dass nicht lediglich ein Gasführungskanal gebildet ist, sondern dass wenigstens zwei, insbesondere mehrere, mit Vorteil vier, jeweils durch eine in dem komplementär geformten Oberflächenabschnitt der Aufnahmeöffnung ausgeformte, kanalartige Ausnehmungen zwischen der Kontaktspitzenaufnahme und der Kontaktspitze gebildete Gasführungskanäle vorhanden sind, wobei die Gasführungskanäle jeweils einerseits mit der Zufuhr von Schutzgas aus der Medienzuführung und andererseits mit dem Gasverteiler verbunden sind. Auf diese Weise wird über eine größere Kontaktfläche Schutzgas entlang des rückwärtigen Abschnittes der Kontaktspitze geführt und trägt zur Kühlung der Kontaktspitze und ggf. weiterer von dem Schutzgas in diesem Abschnitt überstrichener Teile bei. Die so ausgebildeten zwei oder mehr Gasführungskanäle können insbesondere entlang eines Umfangs der Kontaktspitze mit gleichmäßigen Winkelabständen verteilt angeordnet sein. So wird erreicht, dass die Kühlwirkung symmetrisch entlang des Umfangs verteilt ist, und es sind zwischen den Gasführungskanälen weiterhin in ausreichender Größe Flächen belassen, in denen die Kontaktspitze mit ihrem sich verjüngenden Bereich mit dem komplementär geformten Oberflächenabschnitt der Aufnahmeöffnung in innigem mechanischen und vor allem elektrischen Kontakt steht für eine sichere und ausreichende Überführung des Schweißstroms in die Kontaktspitze.

Mit Vorteil ist der bzw. sind die durch die kanalartige(n) Ausnehmung(en) gebildete Gasführungskanal bzw. Gasführungskanäle mit einem zu dem vorderseitigen Ende der Kontaktspitze hin sich verjüngenden Querschnitt ausgebildet. Hierdurch wird eine verbesserte Führung des an dieser Stelle als Kühlmediums eingesetzten Schutzgases erreicht mit verbesserten strömungsdynamischen Eigenschaften.

Erfindungsgemäß ist bei dem erfindungsgemäßen Schweißbrenner eine Gasaustrittsbohrung vorgesehen, die die Kontaktspitzenaufnahme quert und in dem wenigstens einen Gasführungskanal mündet und durch die Schutzgas aus dem Gasführungskanal zu einer Innenseite des Gasverteiler überführt werden kann. Sind mehrere Gasführungskanäle vorgesehen, so ist bevorzugt für jeden der Gasführungskanäle eine solche Gasaustrittsbohrung vorgesehen, wobei diese Gasaustrittsbohrungen vorzugsweise in einer gleichen axialen Positionen, bezogen auf eine Längsachse des Schweißbrenners bzw. der Kontaktspitze, und radial entlang des Umfangs verteilt angeordnet sind. Durch diese Gasaustrittsbohrungen kann im Betrieb das Schutzgas, nachdem es den rückwärtigen Abschnitt der Kontaktspitze überstrichen und dort eine Kühlwirkung erzeugt hat, in den Gasverteiler eingebracht werden, von wo aus es, umfangsmäßig verteilt, weitergeleitet wird in Richtung des Vorderendes des Schweißbrenners.

Der Gasverteiler des erfindungsgemäßen Schweißbrenners weist erfindungsgemäß diesen querende, entlang eines Umfangs des Gasverteilers verteilte Gasdurchtrittsöffnungen zum Führen des Schutzgases von der Innenseite des Gasverteilers zu einer Außenseite des Gasverteilers und zur Weiterleitung des Schutzgases zum Vorderende des Schweißbrenners auf, die insbesondere ebenfalls in einer entlang der Längsachse gesehen gleichen Position lediglich radial entlang des Umfangs verteilt angeordnet sein können, wobei dann erfindungsgemäß die Gasaustrittsbohrung(en) in der axialen Richtung gesehen näher zum vorderseitigen Ende des Gasverteilers liegt bzw. liegen als die Gasdurchtrittsöffnungen. Durch diese Maßnahme muss das aus der Gasaustrittsöffnung bzw. aus den Gasaustrittsöffnungen austretende Schutzgas im Gasverteiler zunächst entgegen der ursprünglichen Strömungsrichtung zurückströmen, bevor es durch die Gasdurchtrittsöffnungen austritt und dann wiederum in entgegengesetzter Richtung fortströmt in Richtung des Vorderendes des Schweißbrenners. Diese Maßnahme führt zu einer Verlängerung der von dem Gas mit einer Kühlwirkung überstrichenen Strecke und zu einer besseren Homogenisierung des Schutzgasstroms und damit zu einem verbesserten Strömungsbild des Schutzgases, wenn dieses am Vorderende des Schweißbrenners austritt.

Zusätzlich zu der bzw. den Gasaustrittsbohrung(en) ist eine bzw. sind mehrere Gaseintrittsbohrung(en) erfindungsgemäß vorgesehen, die die Kontaktspitzenaufnahme in einer verglichen mit einer Position der Gasaustrittsbohrung(en) in axialer Richtung weiter von dem Vorderende des Schweißbrenners entfernt liegenden Position quert bzw. queren und in dem bzw. den Gasführungskanal bzw. Gasführungskanälen zur Überführung von zuströmenden Schutzgas in den Gasführungskanal bzw. in die Gasführungskanäle mündet bzw. münden. Solch eine Gaseintrittsbohrung bzw. solche Gaseintrittsbohrungen werden vorzugsweise dann vorgesehen, wenn eine Gaszuführung von dem rückwärtigen

Anschluss an die Medienzuführung durch den Schweißbrenner in einer radial außen liegenden Position erfolgt.

Mit Vorteil kann bei dem erfindungsgemäßen Schweißbrenner vorgesehen sein, dass der sich verjüngende Bereich der Kontaktspitze bis zu deren rückwärtigen Ende reicht. Bei einer solchen Ausgestaltung schließt sich dann insbesondere kein weiterer, beispielsweise zylindrisch geformter Abschnitt der Kontaktspitze an, der, sofern er in einer entsprechend geformten Aufnahme ruht, wiederum zu den vorstehend beschriebenen Problemen eines Blockierens oder Verklemmens führen kann, wenn eine verschlissene Kontaktspitze aus der Kontaktspitzenaufnahme entfernt und durch eine frische Kontaktspitze ersetzt werden soll.

Hingegen kann es möglich sein und wird in einer derzeit bevorzugten Ausgestaltungsform auch so praktiziert, dass die Kontaktspitze in ihrem rückwärtigen Abschnitt einen von ihrem vorderseitigen Ende her gesehen vor dem sich verjüngenden Bereich gelegenen zylindrischen Bereich aufweist. Dieser ist dabei insbesondere von einer diesen Bereich umgebenden Wandung der Aufnahmeöffnung distanziert, sodass ein Zwischenraum belassen ist und dieser zylindrische Abschnitt nicht durch eine, insbesondere thermische, Verformung zu einem wie vorstehend beschriebenen Verklemmen führen kann.

Zum lösbaren Festlegen in der Kontaktspitzenaufnahme kann die Kontaktspitze des erfindungsgemäßen Schweißbrenners insbesondere ein in einem sich an den rückwärtigen Abschnitt in Richtung des vorderseitigen Endes anschließenden Festlegungsabschnitt ein Gewinde aufweisen. Mit diesem Gewinde kann die Kontaktspitze in einem Gegengewinde festgeschraubt werden, und so in die Kontaktspitzenaufnahme eingepresst, insbesondere mit dem sich verjüngenden Bereich des rückwärtigen Abschnittes in die Aufnahmeöffnung der Kontaktspitzenaufnahme gezwungen werden. Es sind hier aber auch andere Arten der Festlegung denkbar, z.B. eine Art Bajonettverbindung.

Bei dem erfindungsgemäßen Schweißbrenner kann insbesondere in einer Ausgestaltungsvariante der Gasverteiler auf die Kontaktspitzenaufnahme aufgesetzt und mit dieser lösbar verbunden sein, insbesondere verschraubt. Dabei kann auch und mit Vorteil vorgesehen sein, dass die Kontaktspitze an dem Gasverteiler lösbar festgelegt ist und mit dem rückwärtigen Abschnitt in die Aufnahmeöffnung der Kontaktspitzenaufnahme hineinragt. Insbesondere kann die Kontaktspitze, wenn diese wie vorstehend beschrieben in dem Festlegungsabschnitt ein Gewinde aufweist, in ein an dem Gasverteiler ausgebildetes Innengewinde eingeschraubt werden. Dabei wird dann insbesondere der Gasverteiler durch die darin eingeschraubte Kontaktspitze an einem in Richtung des Vorderendes des Schweißbrenners weisenden vorderen Ende verschlossen, insbesondere in einer solchen Weise gasdicht, dass das Schutzgas dort nicht austreten kann.

Alternativ zu einer Gestaltung der Kontaktspitze mit einem sich kontinuierlich, insbesondere konisch, zu deren rückwärtigen Ende hin verjüngende Bereich, kann dieser Bereich, wie vorstehend bereits erwähnt, auch gestuft sich verjüngend gebildet sein. Dann kann insbesondere auch vorgesehen sein, dass der zu dem sich derart verjüngenden Bereich der Kontaktspitze komplementär geformte Oberflächenabschnitt der in der Kontaktspitzenaufnahme vorgesehenen Aufnahmeöffnung kontinuierlich sich verjüngend geformt ist, und zwar so, dass in wenigstens einem Abschnitt, in dem der sich verjüngende Bereich eine Stufe aufweist, wenigstens ein Querkanal gebildet ist. Dieser Querkanal verläuft im Wesentlichen entlang der Umfangrichtung der Kontaktspitze. Bei einer solchen Gestaltung liegt also der sich verjüngende Bereich in denjenigen Abschnitten, in denen ein physischer Kontakt zwischen dem sich verjüngenden Bereich und der Aufnahme erhalten wird, nicht über die Länge des sich verjüngenden Bereichs durchgehend an, sondern es ist wenigstens ein Querkanal gebildet; es können auch mehrere Querkanäle gebildet sein. In diesen kann eine weitere Kühlwirkung durch das durchströmende Gas erzielt werden. Dies kann dann noch weiter verbessert werden, wenn der wenigstens eine Gasführungskanal in Abschnitten, mit denen er in den Querkanal mündet, umfangsmäßig versetzt gebildet ist. Dann wird das strömende Gas gezwungen, in dem Querkanal einem dem Umfang der Kontaktspitze folgenden Strömungsweg zu folgen.

Die Kontaktspitze weist einen in Einbaulage der Kontaktspitze zu einer Schweißstelle weisenden Frontabschnitt, einen sich rückwärtig an den Frontabschnitte anschließenden Befestigungsabschnitt sowie einen sich an den Festlegungsabschnitt rückwärtig anschließenden rückwärtigen Abschnitt auf. Mit dem Festlegungsabschnitt, der insbesondere ein Gewinde, aber grundsätzlich auch andere Befestigungsstrukturen, wie z.B. vorstehende Vorsprünge einer Bajonettverbindung oder dergleichen, aufweisen kann, kann die Kontaktspitze in einer Kontaktspitzenaufnahme mit entsprechender Gegenstruktur festgelegt werden. Der rückwärtige Abschnitt der Kontaktspitze dient dabei ebenfalls einer Festlegung in der Kontaktspitzenaufnahme eines Schweißbrenners.

Diese Kontaktspitze zeichnet sich nun vorteilhafterweise dadurch aus, dass das Verhältnis einer von der Kontaktspitze in dem sich verjüngenden Bereich ausgebildeten äußeren Oberfläche zu einem Radius der Kontaktspitze in dem rückwärtigen Abschnitt dort, wo der sich verjüngende Bereich mit dem größeren Radius ansetzt, also an einer Basis des sich verjüngenden Bereichs, wenigstens 35 mm, vorzugsweise wenigstens 40 mm, insbesondere wenigstens 43 mm beträgt. Der Umstand, dass hier ein Verhältnis mit einer Längenangabe in mm versehen und nicht dimensionslos ist, rührt daher, dass ein Verhältnis einer Fläche zu einer Länge angegeben ist. Dieser Wert ist, verglichen mit aus dem Stand der Technik bekannten, sich verjüngende Bereiche in ihren rückwärtigen Abschnitten aufweisenden Kontaktspitzen besonders hoch. Bekannte solche Kontaktspitzen weisen in der Regel ein Verhältnis dieser Werte im Bereich von um die 20 mm, in Ausnahmefällen bis 30 mm auf. Dies ist dadurch zu erklären, dass die als Verbrauchsmaterial häufig zu ersetzenden Kontaktspitzen, die typischerweise aus dem vergleichsweise teuren Material Kupfer hergestellt werden, in dem rückwärtigen Bereich, der zum eigentlichen Schweißprozess bei den bekannten Schweißbrennern lediglich durch den dort stattfindenden Schweißstromübertrag beitragen, zur Reduktion der Materialkosten in diesem Bereich möglichst materialsparend, also kurz und mithin mit kleiner außenliegenden Oberfläche eines sich verjüngenden Abschnitts, gefertigt werden. Die Oberfläche dieses sich verjüngenden Bereichs im Verhältnis zu dem Radius an dessen Basis bestimmt sich dabei wesentlich über die für einen ausreichenden Stromübertrag benötigte Kontaktfläche. Für den vorliegenden Schweißbrenner wird nun aber bewusst ein Teil der Außenfläche der Kontaktspitze in diesem sich verjüngenden Bereich von dem Stromübertrag ausgenommen, zugunsten der Ausbildung des Gasführungskanals, bzw. der Gasführungskanäle, der bzw. die einem Wärmeabtrag dient bzw. dienen. Um nun aber einerseits weiterhin ausreichend Fläche für den Stromübertrag zu erhalten, andererseits in diesem Bereich ausreichend in dem oder den Gasführungskanal bzw. Gasführungskanälen exponiert liegende Oberfläche für die Wärmeabgabe an das dort vorbeistreichende Schutzgas zu erhalten, ist der sich verjüngende Bereich des rückwärtigen Abschnitts der Kontaktspitze mit einer vergrößerten Oberfläche und typischerweise auch verlängert ausgebildet. So haben sich denn auch Verhältnisse von Oberfläche des sich verjüngenden Abschnitts zu Radius an der Basis des sich verjüngenden Abschnitts von wenigstens 35 mm, vorzugsweise wenigstens 40 mm, insbesondere wenigstens 43 mm und mehr als besonders geeignet erwiesen, um nun die doppelte Aufgabe dieses sich verjüngenden Abschnitts, nämlich Stromübertrag und Bereitstellen einer Wärme abgebenden Fläche, zu erfüllen. Der dafür erforderliche höhere Materialeinsatz kann durch die verbesserte Kühlung in dem erfindungsgemäßen Schweißbrenner und durch die dadurch erreichte verlängerte Standzeit der Kontaktspitze mehr als kompensiert werden.

Weiterhin kann bei dem erfindungsgemäßen Schweißbrenner vorgesehen sein, dass die Kontaktspitze eine zentrale Bohrung aufweist zum Durchführen und elektrischen Kontaktieren eines über die Medienzuführung zugeführten Schweißdrahtes in einer wie bei derartigen Kontaktspitzen üblichen und bekannten Weise.

Ein vorderseitiges Ende, bzw. ein Frontabschnitt, der Kontaktspitze des erfindungsgemäßen Schweißbrenners, mit welchem diese in Richtung des Vorderendes des Schweißbrenners ragt und vorsteht, kann grundsätzlich mit unterschiedlicher Formgebung versehen sein, zum Beispiel zylindrisch. Bevorzugt ist hier in einer aktuellen Ausgestaltungsvariante ein ebenfalls sich verjüngender, insbesondere konischer, Verlauf gewählt, wobei sich die Kontaktspitze in diesem Abschnitt hin zu dem Vorderende des Schweißbrenners verjüngt.

Weitere Vorteile und Merkmale des hier beschriebenen erfindungsgemäßen Schweißbrenners werden dem Fachmann noch einmal verdeutlicht anhand der nachstehenden Beschreibung möglicher Ausgestaltungsvarianten von Ausführungsbeispielen anhand der beigefügten Figuren. Dabei zeigen:
- Figur 1: eine Explosionsdarstellung eines Ausführungsbeispiels des vorderen Abschnittes eines erfindungsgemäßen Schweißbrenners;
- Figur 2: eine Kontaktspitze des erfindungsgemäßen Schweißbrenners aus Figur 1;
- Figur 3: eine Kontaktspitzenaufnahme des erfindungsgemäßen Schweißbrenners aus Figur 1 in einer Ansicht schräg von der Vorderseite her;
- Figur 4: die Kontaktspitzenaufnahme aus Figur 3 in einer Seitenansicht;
- Figur 5: in einer teilweise weggeschnittenen Seitenansicht die Anordnung der Kontaktspitze in der Kontaktspitzenaufnahme bei dem erfindungsgemäßen Schweißbrenner gemäß Figur 1
- Figur 6: die Anordnung der Kontaktspitze in der Kontaktspitzenaufnahme wie in Figur 5 in einer teilweise weggeschnittenen isometrischen Ansicht;
- Figur 7: einen Gasverteiler des erfindungsgemäßen Schweißbrenners aus Figur 1;
- Figur 8: den Gasverteiler nach Figur 7 in einer längsgeschnittenen Ansicht;
- Figur 9: in einer teilgeschnittenen Ansicht den vorderen Abschnitt des erfindungsgemäßen Schweißbrenners aus Figur 1 mit eingezeichneten Strömungslinien zur Verdeutlichung des Schutzgasstroms; und
- Figur 10: eine vergrößerte Darstellung eines Ausschnitts aus Figur 9 zur Veranschaulichung des Strömungsweges des Schutzgases im Bereich des rückwärtigen Abschnitts der Kontaktspitze und des Gasverteilers.

In den nachfolgend zur Erläuterung des hier gezeigten Ausführungsbeispiels eines erfindungsgemäßen Schweißbrenners referenzierten Figuren sind schematisierte Darstellungen der wesentlichen Elemente eines erfindungsgemäßen Schweißbrenners gezeigt, wobei gleiche Elemente mit gleichen Bezugszeichen versehen sind. Die nachfolgende Beschreibung ist als eine Beschreibung lediglich eines möglichen Ausführungsbeispiels zu verstehen, wobei es weitere, hier nicht näher erläuterte Ausführungsvarianten eines erfindungsgemäßen Schweißbrenners gibt, die sich dem Fachmann anhand der vorstehenden allgemeinen Beschreibung der Erfindung sowie anhand der nachstehenden Patentansprüche ohne weiteres erschließen. Die nachstehende Beschreibung des Ausführungsbeispiels soll insoweit insbesondere nicht als den Umfang und die Tragweite der Erfindung beschränkend verstanden werden, die in den Ansprüchen offenbart ist.

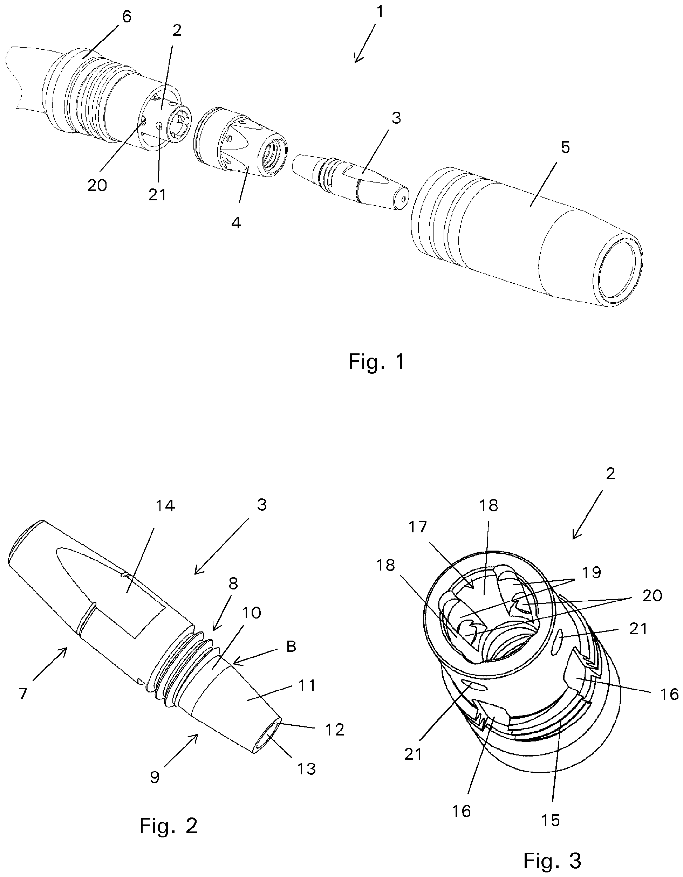

In Figur 1 ist zunächst in einer Explosionsdarstellung ein erfindungsgemäßer Schweißbrenner 1 in seinem vorderen Abschnitt gezeigt. Der rückwärtige, der Schweißstelle abgewandte Abschnitt des Schweißbrenners 1 entspricht in seiner Bauform derjenigen üblicher und herkömmlicher Schweißbrenner und ist somit hier nicht näher gezeigt oder erläutert. An einem rückwärtigen Ende des rückwärtigen Abschnitts des Schweißbrenners 1 ist dabei eine Medienzuführung angeschlossen, über die Schweißmedien, insbesondere Schutzgas, Schweißstrom und Schweißdraht, ggf. auch Kühlflüssigkeit, zugeführt werden. Auch weitere Steuer- und Versorgungsleitungen können dort angeschlossen sein.

In der Figur 1 ist der Aufbau des vorderen Endes des Schweißbrenners 1 mit einer Kontaktspitzenaufnahme 2, einer Kontaktspitze 3, einen Gasverteiler 4 und einer Gasdüse 5 zu erkennen. Der Gasverteiler 4 ist im zusammengefügten Zustand des Schweißbrenners 1 auf der Kontaktspitzenaufnahme 2 aufgesetzt und mit dieser positionsfest verbunden, in dem gezeigten Ausführungsbeispiel verschraubt, und die Kontaktspitze 3 ist an dem Gasverteiler 4 festgelegt und ruht mit einem rückwärtigen Ende in der Kontaktspitzenaufnahme 2. Über diese Anordnung ist die Gasdüse 5 gestülpt und an einem Grundkörper 6 des Schweißbrenners 1 festgelegt, hier verschraubt.

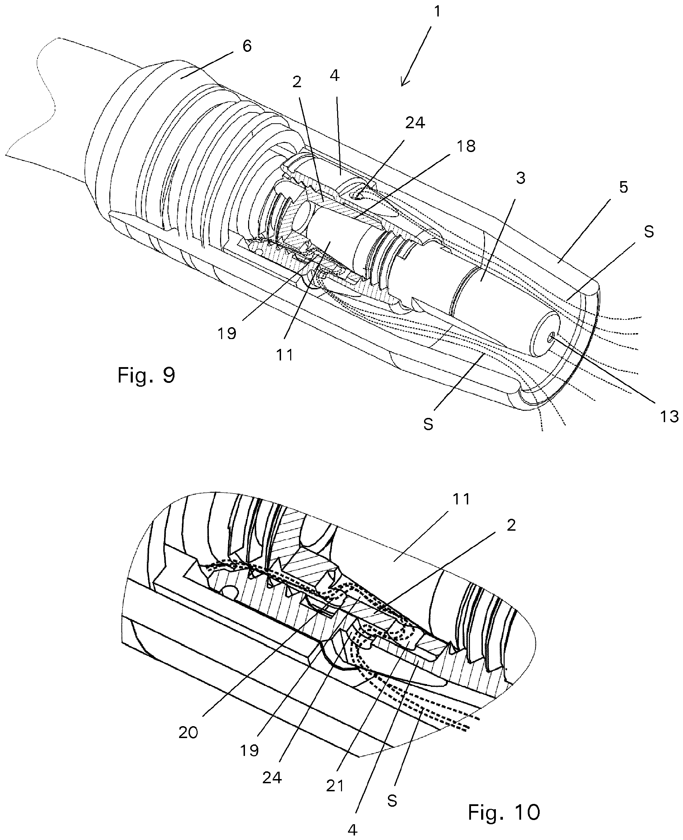

Die einzelnen in Figur 1 gezeigten Komponenten sind in den Figuren 2 bis 4 sowie 7 und 8 noch einmal jeweils isoliert dargestellt. Figur 2 zeigt die Kontaktspitze 3. Diese weist einen vorderseitigen, im Betrieb der Schweißstelle zugewandten Frontabschnitt 7, einen sich in Richtung eines rückwärtigen Endes an den Frontabschnitt 7 anschließenden Festlegungsabschnitt 8, in dem in diesem Ausführungsbeispiel ein Außengewinde geformt ist, sowie einen sich an den Festlegungsabschnitt 8 anschließenden rückwärtigen Abschnitt 9 auf. Dieser rückwärtige Abschnitt 9 unterteilt sich in einen direkt an den Festlegungsabschnitt 8 angrenzenden, zylinderförmigen Bereich 10 sowie einen von diesem Bereich 10 ausgehend sich zum rückwärtigen Ende hin konisch verjüngenden Bereich 11. An einem rückwärtigen Stirnende 12 mündet eine Bohrung 13, die in Längsrichtung durch die Kontaktspitze hindurch geführt ist und an deren vorderen Ende austritt (vergleiche Figur 9). In dem Frontabschnitt 7 sind an einander radial gegenüberliegenden Positionen Abflachungen 14 vorgesehen, die als Werkzeugansatz dienen, um ein Werkzeug zum Festlegen bzw. Lösen der Kontaktspitze 3 in dem bzw. von dem Gasverteiler 4 anzusetzen. Erfindungsgemäß beträgt bei der Kontaktspitze 3 das Verhältnis der in dem sich verjüngenden Bereich ausgebildeten äußeren Oberfläche zu einem Radius der Kontaktspitze 3 in dem rückwärtigen Abschnitt 9 dort, wo der sich verjüngende Bereich 11 mit dem größeren Radius ansetzt, also an einer Basis B des sich verjüngenden Bereichs 11, wenigstens 35 mm, vorzugsweise wenigstens 40 mm, insbesondere wenigstens 43 mm beträgt. Dieses Verhältnis ist deshalb mit einer Dimension in mm angegeben, da hier eine Fläche (gemessen in mm²) zu einer Strecke, dem Radius, (gemessen in mm) ins Verhältnis gesetzt wird. Die Kontaktspitze 3 ist aus einem elektrisch leitenden Material, insbesondere aus Kupfer, gebildet.

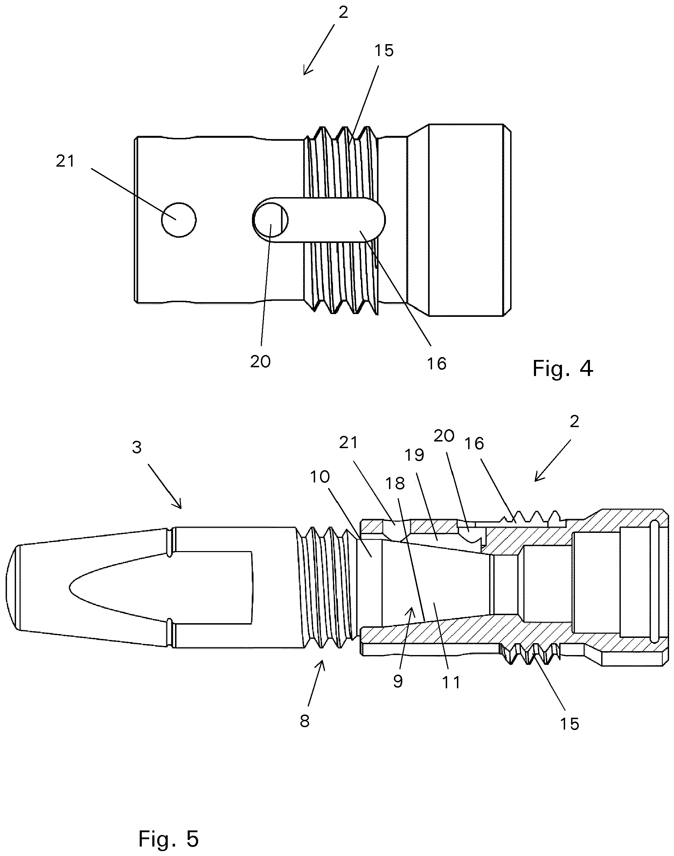

Figuren 3 und 4 zeigen die Kontaktspitzenaufnahme 2. Diese ist mit einem Außengewinde 15 versehen, welches durch sich in axialer Richtung erstreckende, und entlang des Umfangs gleichmäßig verteilte Ausnehmungen 16 durchbrochen ist. Von einem vorderseitigen Stirnende her ist in die Kontaktspitzenaufnahme 2 eine Ausnehmung 17 eingebracht, die umfangsseitige, konisch und komplementär zu dem konisch sich verjüngenden Abschnitt 11 der Kontaktspitze 3 geformte Flächenabschnitte 18 aufweist. Zwischen diesen Flächenabschnitten 18 erstrecken sich radial nach außen in das Material der Kontaktspitzenaufnahme 2 geführte Ausnehmungen oder Einstiche 19, die in diesem Ausführungsbeispiel sich in Längsrichtung der Kontaktspitzenaufnahme 2 erstrecken. In dem Bereich der Ausnehmungen 16 sind durch die Wandung der Kontaktspitzenaufnahme 2 bis in die in deren innere reichende Ausnehmung 17 Gaseintrittsbohrungen 20 geführt, die in den Ausnehmungen 19 münden. Gasaustrittsbohrungen 21 durchtreten die Wandung der Kontaktspitzenaufnahme 2 an in axialer Richtung weiter dem vorderen Ende der Kontaktspitzenaufnahme 2 zugewandten Positionen der Ausnehmungen 19.

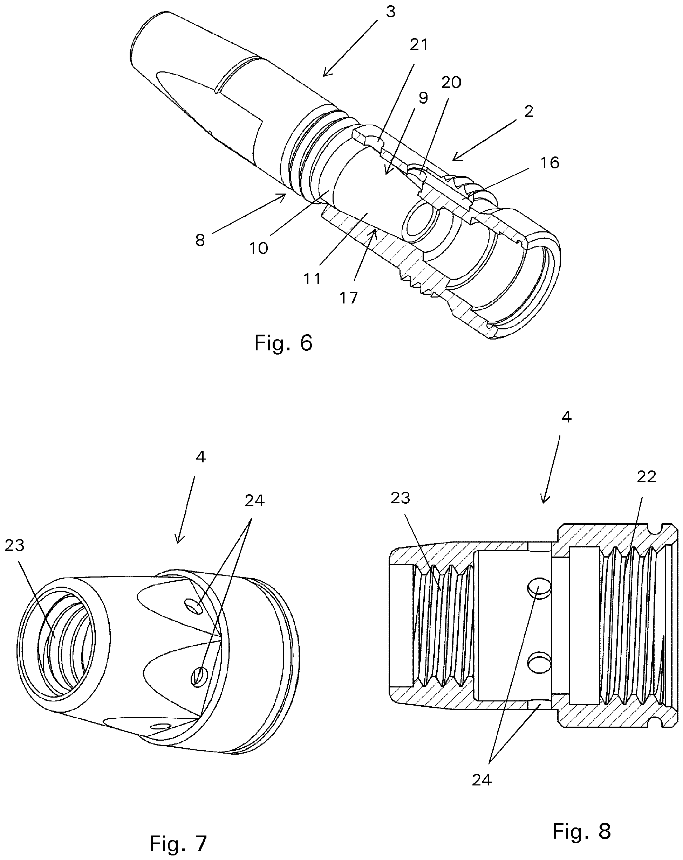

Figuren 5 und 6 zeigen den Sitz des rückwärtigen Abschnitts 9 der Kontaktspitze 3 in der Ausnehmung 17 der Kontaktspitzenaufnahme 2. Insbesondere ist dort veranschaulicht, dass bei ordnungsgemäßem Sitz der Kontaktspitze 3 in der Kontaktspitzenaufnahme 2 die Kontaktspitze 3 mit ihrem konisch sich verjüngenden Bereich 11 in engem Kontakt an den Flächenabschnitten 18 anliegt, sodass dort ein mechanischer Kontakt erhalten und so ein fester Sitz der Kontaktspitze 3 in der Kontaktspitzenaufnahme 2 gewährleistet wird. In den Abschnitten, in denen die Ausnehmungen 19 in der Kontaktspitzenaufnahme 2 eingebracht sind, sind Gasführungskanäle zwischen der konischen Oberfläche der Kontaktspitze 3 in dem Bereich 11 und der Kontaktspitzenaufnahme 2 ausgebildet. In diese Gasführungskanäle münden die Gaseintrittsbohrungen 20 sowie die Gasaustrittsbohrungen 21. Im Betrieb ist die Kontaktspitzenaufnahme 2, die ebenfalls aus einem leitenden Material, insbesondere aus Kupfer, besteht, mit der Zuleitung des Schweißstroms elektrisch verbunden, also elektrisch kontaktiert. Dadurch wird über den flächigen Kontakt von Mantelflächenabschnitten der Kontaktspitze 3 in dem konisch sich verjüngenden Bereich 11 mit den Flächenabschnitten 18 eine elektrische Kontaktierung der Kontaktspitze 3 hergestellt, sodass diese im Betrieb mit Schweißstrom beaufschlagt werden kann. Durch die vergleichsweise große Flächenausdehnung der Flächenabschnitte 18 erfolgt hier eine elektrische Kontaktierung über eine große Gesamtfläche, sodass für einen guten elektrischen Übergang an dieser Stelle gesorgt ist. Mit seinem Stirnende 12 liegt die Kontaktspitze 3 dabei frei und ohne eine Berührung mit der Kontaktspitzenaufnahme 2 oder anderen Teilen.

Die Figuren 7 und 8 zeigen den Gasverteiler 4. Hier ist zu erkennen, dass dieser im Bereich seiner beiden Längsenden je ein Innengewinde 22 und 23 aufweist. Mit dem Innengewinde 22 wird der Gasverteiler 4 auf das in Figur 3 erkennbare Außengewinde 15 der Kontaktspitzenaufnahme 2 aufgeschraubt. In das Innengewinde 23 wird die Kontaktspitze 3 mit dem in dem Befestigungsabschnitt 8 ausgebildeten Außengewinde eingeschraubt und so mit dem rückwärtigen Abschnitt 9, insbesondere mit dem konisch sich verjüngenden Bereich 11 in die Aufnahmeöffnung 17 der Kontaktspitzenaufnahme 2 eingepresst, sodass der wie vorstehend beschriebene innige Kontakt zwischen dem konisch sich verjüngenden Bereich 11 und den Flächenabschnitt 18 entsteht und gewährleistet wird (vergleiche auch Fig. 9). Zu betonen ist hierbei, dass der zylinderförmige Bereich 10 im rückwärtigen Abschnitt 9 der Kontaktspitze 3 mit einem Abstand zu der diesen umgebenden Innenwand der Kontaktspitzenaufnahme 2 angeordnet liegt, dass dort also keine Berührung der Kontaktspitzenaufnahme 2 mit der Kontaktspitze 3 stattfindet. Der Gasverteiler 4 weist in einer an sich üblichen Weise in gleicher Längsposition befindliche, radial verteilte Gasdurchtrittsöffnungen 24 auf, die dem Austritt von dort hindurch strömenden Schutzgas dienen

Die Gasführung in dem erfindungsgemäßen Schweißbrenner ist in den Figuren 9 und 10 veranschaulicht. In üblicher Weise über die Medienzuführung zugeführtes Schutzgas S, das hier durch gestrichelte Linien veranschaulicht ist, strömt zunächst entlang der Ausnehmungen 16 (vergleiche Figuren 5 und 6) außen am rückwärtigen Ende der Kontaktspitzenaufnahme 2 entlang und tritt dann durch die Gaseintrittsöffnungen 20 in die durch die Ausnehmungen 19 gebildeten Gasführungskanäle ein. Dabei strömt das Schutzgas entlang des rückwärtigen Abschnitts 9 (vergleiche auch Figuren 5 und 6) der Kontaktspitze 3, insbesondere entlang dessen konisch geformten Bereich 11, und sorgt hier für eine Kühlwirkung. Das Schutzgas S strömt weiter voran in den sich im Querschnitt verengenden Gasführungskanäle und gelangt zu den Gasaustrittsöffnungen 21, wo es den Innenbereich der Kontaktspitzenaufnahme 2 verlässt und in einen zwischen dem Gasverteiler 4 und der Kontaktspitzenaufnahme 2 gebildeten Raum eintritt. Insbesondere in Figur 10 ist gut zu erkennen, dass die Gasaustrittsöffnungen 21 in Längsrichtung gesehen in einer Position vor der Position der Gasdurchtrittsöffnungen 24 des Gasverteilers 4 liegt, sodass das Schutzgas an dieser Stelle eine Umlenkung erfährt und zunächst entgegen der vorwärtsgewandten Richtung rückwärtig strömen muss, bevor es durch die Gasdurchtrittsöffnungen 24 aus dem Gasverteiler 4 austritt und außen entlang des Gasverteilers 4 innerhalb der Gasdüse 5 weiter voranströmt, anschließend entlang des Frontabschnitts 7 der Kontaktspitze 3 strömt und schließlich die Gasdüse 5 an dem vorderen, der Schweißstelle zugewandten Ende des Schweißbrenners 1 in einer säulenartig den dort austretenden Schweißdraht umgebenden Weise verlässt.

Durch die, in Figur 10 vergrößert dargestellte, Gasführung erfolgt, wie bereits erwähnt, eine deutliche und spürbar verbesserte Kühlwirkung der Kontaktspitze 3. So kann insbesondere die Kontaktspitze 3 in dem erfindungsgemäßen Schweißbrenner deutlich besser gekühlt werden, woraus sich eine verbesserte Standzeit der Kontaktspitze ergibt.

Eine Kühlwirkung, dies lässt wiederum auch die Figur 10 erkennen, erzielt das Schutzgas auf seinem wie in Figur 10 gezeigten Weg auch im Hinblick auf den Gasverteiler 4.

Aus der vorstehenden Beschreibung des Ausführungsbeispiels sind noch einmal die Vorteile und Merkmale der hier offenbarten und beanspruchten Erfindung deutlich geworden. In nachfolgenden Ansprüchen wird diese Erfindung in ihrer allgemeinen Tragweite bestimmt und bezeichnet.

### Bezugszeichenliste

- 1: Schweißbrenner
- 2: Kontaktspitzenaufnahme
- 3: Kontaktspitze
- 4: Gasverteiler
- 5: Gasdüse
- 6: Grundkörper
- 7: Frontabschnitt
- 8: Festlegungsabschnitt
- 9: rückwärtiger Abschnitt
- 10: zylinderförmiger Bereich
- 11: konisch sich verjüngender Bereich
- 12: Stirnende
- 13: Bohrung
- 14: Abflachung
- 15: Außengewinde
- 16: Ausnehmung
- 17: Ausnehmung / Aufnahmeöffnung
- 18: Flächenabschnitt
- 19: Ausnehmung
- 20: Gaseintrittsbohrung
- 21: Gasaustrittsbohrung
- 22: Innengewinde
- 23: Innengewinde
- 24: Gasdurchtrittsöffnung

- B: Basis
- S: Schutzgas

## Patentansprüche

1. Schweißbrenner (1) für das Schutzgasschweißen mit einem rückwärtigen Anschluss an eine jedenfalls eine Zufuhr von Schutzgas (S) sowie eine Zuleitung von Schweißstrom umfassende Medienzuführung sowie mit einem schweißseitigen Vorderende, wobei der Schweißbrenner (1) eine zur Beaufschlagung mit dem Schweißstrom elektrisch kontaktierte und elektrisch leitende Kontaktspitzenaufnahme (2) sowie eine in der Kontaktspitzenaufnahme (2) lösbar angeordnete, mit der Kontaktspitzenaufnahme (2) in elektrisch leitendem Kontakt stehende, aus einem elektrisch leitenden Material gebildete Kontaktspitze (3) sowie einen Gasverteiler (4) zum Verteilen und Zuleiten des Schutzgases (S) in Richtung des Vorderendes des Schweißbrenners (1) aufweist, wobei ein vorderseitiges Ende der Kontaktspitze (3) zu dem Vorderende des Schweißbrenners (1) geführt ist und ein rückwärtiger Abschnitt (9) der Kontaktspitze (3) in einer Aufnahmeöffnung (17) der Kontaktspitzenaufnahme (2) ruht, wobei der rückwärtige Abschnitt (9) der Kontaktspitze (3) einen sich, insbesondere kontinuierlich, vorzugsweise konisch, zu einem rückwärtigen Ende (12) der Kontaktspitze (3) hin verjüngenden Bereich (11) aufweist und die Aufnahmeöffnung (17) in der Kontaktspitzenaufnahme (2) eine zu dem sich verjüngenden Bereich (11) der Kontaktspitze (3) derart komplementär geformten Oberflächenabschnitt (18) aufweist, dass die Kontaktspitze (3) mit dem sich verjüngenden Bereich (11) mit dem komplementär geformten Oberflächenabschnitt (18) in engem mechanischen und elektrischen Kontakt steht, **gekennzeichnet durch** wenigstens eine in dem komplementär geformten Oberflächenabschnitt (18) der Aufnahmeöffnung (17) ausgeformte, kanalartige Ausnehmung (19), durch die zwischen der Kontaktspitzenaufnahme (2) und der Kontaktspitze (3) ein Gasführungskanal ausgebildet ist, der einerseits mit der Zufuhr von Schutzgas (S) aus der Medienzuführung und andererseits mit dem Gasverteiler (4) verbunden ist,
**durch** wenigstens eine die Kontaktspitzenaufnahme (2) querende, in dem wenigstens einen Gasführungskanal mündende Gasaustrittsbohrung (21) zur Überführung von Schutzgas (S) aus dem Gasführungskanal zu einer Innenseite des Gasverteilers (4),
**durch** den Gasverteiler (4) querende, entlang eines Umfanges des Gasverteilers (4) verteilte Gasdurchtrittsöffnungen (24) zum Führen des Schutzgases (S) von der Innenseite des Gasverteilers (4) zu einer Außenseite des Gasverteilers (4) zur Weiterleitung des Schutzgases (S) zum Vorderende des Schweißbrenners (1), wobei die Gasaustrittsbohrung (21) in einer axialen Richtung gesehen näher zu dem vorderseitigen Ende des Gasverteilers (4) liegt als die Gasdurchtrittsöffnungen (24), und
**durch** wenigstens eine Gaseintrittsbohrung (20), die die Kontaktspitzenaufnahme (2) in einer verglichen mit einer Position der Gasaustrittsbohrungen (21) in axialer Richtung weiter von dem Vorderende des Schweißbrenners (1) entfernt liegenden Position quert und in dem Gasführungskanal zur Überführung von zuströmenden Schutzgas (S) in den Gasführungskanal mündet.

2. Schweißbrenner (1) nach Anspruch 1, **dadurch gekennzeichnet, dass** eine elektrische Kontaktierung der Kontaktspitze (3) in dem rückwärtigen Abschnitt (9) ausschließlich über eine Mantelfläche der Kontaktspitze (3) in dem sich verjüngenden Bereich (11) erfolgt, die an dem komplementär geformten Oberflächenabschnitt (18) der Aufnahmeöffnung (17) anliegt.

3. Schweißbrenner (1) nach einem der vorhergehenden Ansprüche, **dadurch gekennzeichnet, dass** wenigstens zwei, insbesondere vier, jeweils einen in dem komplementär geformten Oberflächenabschnitt (18) der Aufnahmeöffnung (17) ausgeformte, kanalartige Ausnehmungen (19) vorhanden sind, die jeweils einen Gasführungskanal zwischen der Kontaktspitzenaufnahme (2) und der Kontaktspitze (3) ausbilden, der jeweils einerseits mit der Zufuhr von Schutzgas (S) aus der Medienzuführung und andererseits mit dem Gasverteiler (4) verbunden ist.

4. Schweißbrenner (1) nach Anspruch 3, **dadurch gekennzeichnet, dass** die die Gasführungskanäle ausbildenden Ausnehmungen (19) entlang eines Umfangs der Kontaktspitze (3) mit gleichmäßigen Winkelabständen verteilt angeordnet sind.

5. Schweißbrenner (1) nach einem der vorhergehenden Ansprüche, **dadurch gekennzeichnet, dass** der oder die durch die kanalartige(n) Ausnehmung(en) (19) gebildete Gasführungskanal oder Gasführungskanäle einen zu dem vorderseitigen Ende der Kontaktspitze (3) hin sich verengenden Querschnitt aufweisen.

6. Schweißbrenner (1) nach einem der vorhergehenden Ansprüche, **gekennzeichnet durch** eine die Kontaktspitzenaufnahme (2) in einer verglichen mit einer Position der Gasaustrittsbohrung (21) in axialer Richtung weiter von dem Vorderende des Schweißbrenners (1) entfernt liegenden Position querende, in dem wenigstens einen Gasführungskanal mündende Gaseintrittsbohrung (20) zur Überführung von zuströmendem Schutzgas (S) in den Gasführungskanal.

7. Schweißbrenner (1) nach einem der vorhergehenden Ansprüche, **dadurch gekennzeichnet, dass** der sich verjüngende Bereich (11) der Kontaktspitze (3) bis zu einem rückwärtigen Ende der Kontaktspitze (3) reicht.

8. Schweißbrenner (1) nach einem der vorhergehenden Ansprüche, **dadurch gekennzeichnet, dass** die Kontaktspitze (3) in ihrem rückwärtigen Abschnitt (9) einen von ihrem vorderseitigen Ende her gesehen vor dem sich verjüngenden Bereich (11) gelegenen zylindrischen Bereich (10) aufweist.

9. Schweißbrenner (1) nach einem der vorhergehenden Ansprüche, **dadurch gekennzeichnet, dass** die Kontaktspitze (3) in einem sich an den rückwärtigen Abschnitt (9) in Richtung des vorderseitigen Endes anschließenden Festlegungsabschnitt (8) ein Gewinde aufweist.

10. Schweißbrenner (1) nach einem der vorhergehenden Ansprüche, **dadurch gekennzeichnet, dass** der Gasverteiler (4) auf die Kontaktspitzenaufnahme (2) aufgesetzt und mit dieser lösbar verbunden ist, insbesondere verschraubt.

11. Schweißbrenner (1) nach Anspruch 10, **dadurch gekennzeichnet, dass** die Kontaktspitze (3) an dem Gasverteiler (4) lösbar festgelegt ist und mit dem rückwärtigen Abschnitt (9) in die Aufnahmeöffnung (17) der Kontaktspitzenaufnahme (2) hineinragt.

12. Schweißbrenner (1) nach einem der vorhergehenden Ansprüche, **dadurch gekennzeichnet, dass** der sich zu dem rückwärtigen Ende (12) der Kontaktspitze (3) hin verjüngende Bereich (11) gestuft gebildet ist und dass der zu dem sich verjüngenden Bereich (11) der Kontaktspitze (3) komplementär geformten Oberflächenabschnitt (18) der in der Kontaktspitzenaufnahme (2) vorgesehenen Aufnahmeöffnung (17) kontinuierlich sich verjüngend geformt ist, so dass in wenigstens einem Abschnitt, in dem der sich verjüngende Bereich (11) eine Stufe aufweist, wenigstens ein Querkanal gebildet ist.

13. Schweißbrenner (1) nach einem der vorhergehenden Ansprüche, **dadurch gekennzeichnet, dass** die Kontaktspitze (3) einen in Richtung des Vorderendes des Schweißbrenners (1) und zu einer Schweißstelle weisenden Frontabschnitt (7) und einen sich rückwärtig an den Frontabschnitt (7) anschließenden Befestigungsabschnitt (8) aufweist, wobei sich an den Befestigungsabschnitt (8) rückwärtig der rückwärtige Abschnitt (9) anschließt, wobei das Verhältnis einer von der Kontaktspitze (3) in dem sich verjüngenden Bereich (11) ausgebildeten äußeren Oberfläche zu einem Radius der Kontaktspitze in dem rückwärtigen Abschnitt (9) dort, wo der sich verjüngende Bereich (11) mit dem größeren Radius ansetzt, wenigstens 35 mm beträgt, vorzugsweise wenigstens 40 mm, insbesondere wenigstens 43 mm.

## Claims

1. A welding torch (1) for gas-shielded arc welding with a rear connection to a media supply comprising at least a supply of shielding gas (S) and a supply line for welding current and with a welding-side front end, wherein the welding torch (1) has an electrically contacted and electrically conductive contact tip holder (2) for application of the welding current and a contact tip (3) which is detachably arranged in the contact tip holder (2), is in electrically conductive contact with the contact tip holder (2) and is formed from an electrically conductive material, as well as a gas distributor (4) for distributing and supplying the shielding gas (S) in the direction of the front end of the welding torch (1), wherein a front end of the contact tip (3) is guided to the front end of the welding torch (1) and a rear section (9) of the contact tip (3) rests in a receiving opening (17) of the contact tip holder (2), wherein the rear section (9) of the contact tip (3) has a region (11) which tapers, in particular continuously, preferably conically, towards a rear end (12) of the contact tip (3), and the receiving opening (17) in the contact tip receptacle (2) has a surface section (18) which is shaped in such a complementary manner to the tapering region (11) of the contact tip (3), that the contact tip (3) with the tapering region (11) is in close mechanical and electrical contact with the complementary shaped surface section (18), **characterised by** at least one channel-like recess (19) formed in the complementarily shaped surface section (18) of the receiving opening (17), through which a gas guide channel is formed between the contact tip receptacle (2) and the contact tip (3), which channel is connected on the one hand to the supply of shielding gas (S) from the media supply and on the other hand to the gas distributor (4), **by** at least one gas outlet bore (21) which crosses the contact tip receptacle (2), gas outlet bore (21) opening into the at least one gas guide channel for transferring shielding gas (S) from the gas guide channel to an inner side of the gas distributor (4), **through** the gas distributor (4), gas passage openings (24) distributed along a circumference of the gas distributor (4) for guiding the shielding gas (S) from the inside of the gas distributor (4) to an outside of the gas distributor (4) for conveying the shielding gas (S) to the front end of the welding torch (1), wherein the gas outlet bore (21) is located closer to the front end of the gas distributor (4) than the gas passage openings (24) when viewed in an axial direction, and **by** at least one gas inlet bore (20), which crosses the contact tip holder (2) in a position further away from the front end of the welding torch (1) in the axial direction compared with a position of the gas outlet bores (21) and opens into the gas guide channel for the transfer of inflowing shielding gas (S) into the gas guide channel.

2. A welding torch (1) according to claim 1, **characterised in that** electrical contacting of the contact tip (3) in the rear section (9) takes place exclusively via a lateral surface of the contact tip (3) in the tapered region (11), which lies against the complementarily shaped surface section (18) of the receiving opening (17).

3. A welding torch (1) according to one of the preceding claims, **characterised in that** there are at least two, in particular four, channel-like recesses (19), each formed in the complementarily shaped surface section (18) of the receiving opening (17), which each form a gas guide channel between the contact tip receiver (2) and the contact tip (3), which is connected in each case on the one hand to the supply of shielding gas (S) from the media supply and on the other hand to the gas distributor (4) .

4. A welding torch (1) according to claim 3, **characterised in that** the recesses (19) forming the gas guide channels are arranged distributed along a circumference of the contact tip (3) with uniform angular spacing.

5. A welding torch (1) according to one of the preceding claims, **characterised in that** the gas guide channel or gas guide channels formed by the channel-like recess or recesses (19) have a cross-section which narrows towards the front end of the contact tip (3).

6. A welding torch (1) according to one of the preceding claims, **characterised by** a gas inlet bore (20) which crosses the contact tip holder (2) in a position further away from the front end of the welding torch (1) in the axial direction compared with a position of the gas outlet bore (21) and opens into the at least one gas guide channel for transferring inflowing shielding gas (S) into the gas guide channel.

7. A welding torch (1) according to one of the preceding claims, **characterised in that** the tapered region (11) of the contact tip (3) extends to a rear end of the contact tip (3).

8. A welding torch (1) according to one of the preceding claims, **characterised in that** the contact tip (3) has in its rear section (9) a cylindrical region (10) located in front of the tapering region (11) as seen from its front end.

9. A welding torch (1) according to one of the preceding claims, **characterised in that** the contact tip (3) has a thread in a fixing section (8) adjoining the rear section (9) in the direction of the front end.

10. A welding torch (1) according to one of the preceding claims, **characterised in that** the gas distributor (4) is placed on the contact tip holder (2) and is detachably connected thereto, in particular screwed.

11. A welding torch (1) according to claim 10, **characterised in that** the contact tip (3) is detachably fixed to the gas distributor (4) and projects with the rear section (9) into the receiving opening (17) of the contact tip holder (2).

12. A welding torch (1) according to one of the preceding claims, **characterised in that** the region (11) tapering towards the rear end (12) of the contact tip (3) is formed in a stepped manner and **in that** the surface section (18) of the receiving opening (17) provided in the contact tip receptacle (z) and complementarily shaped to the tapering region (11) of the contact tip (3) is continuously tapered, so that at least one transverse channel is formed in at least one section in which the tapering region (11) has a step.

13. A welding torch (1) according to one of the preceding claims, **characterised in that** the contact tip (3) has a front section (7) pointing in the direction of the front end of the welding torch (1) and towards a welding point and a fastening section (8) adjoining the front section (7) at the rear, the fastening section (8) being adjoined at the rear by the rear section (9), wherein the ratio of an outer surface formed by the contact tip (3) in the tapered region (11) to a radius of the contact tip in the rear section (9) at the point where the tapered region (11) with the larger radius is located is at least 35 mm, preferably at least 40 mm, in particular at least 43 mm.

## Revendications

1. Chalumeau de soudage (1) pour le soudage à l'arc sous protection gazeuse présentant une connexion arrière à une alimentation en fluides comprenant au moins une alimentation en gaz de protection (S) et une ligne d'alimentation en courant de soudage et avec une extrémité avant côté soudage, dans laquelle le chalumeau de soudage (1) comprend un support de pointe de contact (2) en contact électrique et électriquement conducteur pour l'application du courant de soudage et une pointe de contact (3) qui est disposée de manière amovible dans le support de pointe de contact (2), est en contact électriquement conducteur avec le support de pointe de contact (2) et est formé d'un matériau électriquement conducteur, ainsi qu'un distributeur de gaz (4) pour distribuer et fournir le gaz de protection (S) en direction de l'extrémité avant du chalumeau de soudage (1), dans lequel une extrémité avant de la pointe de contact (3) est guidée vers l'extrémité avant du chalumeau de soudage (1) et une section arrière (9) de la pointe de contact (3) repose dans une ouverture de réception (17) du support de pointe de contact (2), dans lequel la section arrière (9) de la pointe de contact (3) présente une région (11) qui se rétrécit, en particulier de manière continue, de préférence de manière conique, vers une extrémité arrière (12) de la pointe de contact (3), et l'ouverture de réception (17) dans le réceptacle de la pointe de contact (2) présente une section de surface (18) dont la forme est tellement complémentaire de la région effilée (11) de la pointe de contact (3) que la pointe de contact (3) avec la région effilée (11) est en contact mécanique et électrique étroit avec la section de surface de forme complémentaire (18), **caractérisé par** au moins une cavité en forme de canal (19) formée dans la section de surface de forme complémentaire (18) de l'ouverture de réception (17), à travers laquelle un canal de guidage de gaz est formé entre le réceptacle de la pointe de contact (2) et la pointe de contact (3), ce canal étant relié d'une part à l'alimentation en gaz de protection (S) provenant de l'alimentation en fluides et d'autre part au distributeur de gaz (4), **par** au moins un orifice de sortie de gaz (21) qui traverse le réceptacle de la pointe de contact (2), l'orifice de sortie de gaz (21) débouchant dans au moins un canal de guidage de gaz pour transférer le gaz de protection (S) du canal de guidage de gaz à une face interne du distributeur de gaz (4),**par le** distributeur de gaz (4), des ouvertures de passage de gaz (24) réparties le long d'une circonférence du distributeur de gaz (4) pour guider le gaz de protection (S) de l'intérieur du distributeur de gaz (4) vers l'extérieur du distributeur de gaz (4) pour acheminer le gaz de protection (S) vers l'extrémité avant de la chalumeau de soudage (1), dans lequel l'alésage de sortie de gaz (21) est situé plus près de l'extrémité avant du distributeur de gaz (4) que les ouvertures de passage de gaz (24) lorsqu'il est vu dans une direction axiale, et **par** au moins un orifice d'entrée de gaz (20), qui traverse le support de pointe de contact (2) dans une position plus éloignée de l'extrémité avant de la chalumeau de soudage (1) dans la direction axiale par rapport à une position des orifices de sortie de gaz (21) et qui débouche dans le canal de guidage de gaz pour le transfert du gaz de protection (S) entrant dans le canal de guidage de gaz.

2. . Chalumeau de soudage (1) selon la revendication 1, **caractérisé par le fait que** le contact électrique de la pointe de contact (3) dans la partie arrière (9) se fait exclusivement par une surface latérale de la pointe de contact (3) dans la zone conique (11), qui se trouve contre la section de surface de forme complémentaire (18) de l'ouverture de réception (17).

3. . Chalumeau de soudage (1) selon l'une des revendications précédentes, **caractérisé en ce qu'**il y a au moins deux, en particulier quatre, évidements en forme de canal (19), chacun formé dans la section de surface de forme complémentaire (18) de l'ouverture de réception (17), qui forment chacun un canal de guidage de gaz entre le récepteur de pointe de contact (2) et la pointe de contact (3), qui est relié dans chaque cas d'une part à l'alimentation en gaz de protection (S) à partir de l'alimentation en fluides et d'autre part au distributeur de gaz (4) .

4. . Chalumeau de soudage (1) selon la revendication 3, **caractérisé par le fait que** les évidements (19) formant les canaux de guidage des gaz sont répartis le long d'une circonférence de la pointe de contact (3) avec un espacement angulaire uniforme.

5. . Chalumeau de soudage (1) selon l'une des revendications précédentes, **caractérisé par le fait que** le ou les canaux de guidage des gaz formés par le ou les évidements en forme de canal (19) ont une section transversale qui se rétrécit vers l'extrémité avant de la pointe de contact (3).

6. . Chalumeau de soudage (1) selon l'une des revendications précédentes, **caractérisé par** un orifice d'entrée de gaz (20) qui traverse le support de pointe de contact (2) dans une position plus éloignée de l'extrémité avant de la chalumeau de soudage (1) dans la direction axiale par rapport à avec une position de l'orifice de sortie de gaz (21) et débouche dans au moins un canal de guidage de gaz pour transférer le gaz de protection entrant (S) dans le canal de guidage de gaz.

7. . Chalumeau de soudage (1) selon l'une des revendications précédentes, **caractérisé par le fait que** la zone conique (11) de la pointe de contact (3) s'étend jusqu'à une extrémité arrière de la pointe de contact (3).

8. . Chalumeau de soudage (1) selon l'une des revendications précédentes, **caractérisé en ce que** la pointe de contact (3) présente dans sa partie arrière (9) une région cylindrique (10) située en avant de la région effilée (11) vue de son extrémité avant.

9. . Chalumeau de soudage (1) selon l'une des revendications précédentes, **caractérisé en ce que** la pointe de contact (3) présente un filetage dans une section de fixation (8) adjacente à la section arrière (9) en direction de l'extrémité avant.

10. . Chalumeau de soudage (1) selon l'une des revendications précédentes, **caractérisé en ce que** le distributeur de gaz (4) est placé sur le support de pointe de contact (2) et y est relié de manière amovible, notamment vissée.

11. . Chalumeau de soudage (1) selon la revendication 10, **caractérisé par le fait que** la pointe de contact (3) est fixée de manière amovible au distributeur de gaz (4) et fait saillie avec la partie arrière (9) dans l'ouverture de réception (17) du support de pointe de contact (2).

12. . Chalumeau de soudage (1) selon l'une des revendications précédentes, **caractérisé en ce que** la région (11) s'amincissant vers l'extrémité arrière (12) de la pointe de contact (3) est formée en escalier et **en ce que** la section de surface (18) de l'ouverture de réception (17) prévue dans le réceptacle de la pointe de contact (z) et complémentairement formée à la région s'amincissant (11) de la pointe de contact (3) est continuellement amincie, de sorte qu'au moins un canal transversal est formé dans au moins une section dans laquelle la région s'amincissant (11) présente un escalier.

13. . Chalumeau de soudage (1) selon l'une des revendications précédentes, **caractérisé en ce que** la pointe de contact (3) a une section avant (7) pointant dans la direction de l'extrémité avant de la chalumeau de soudage (1) et vers un point de soudage et une section de fixation (8) adjointe à la section avant (7) à l'arrière, la section de fixation (8) étant adjointe à l'arrière par la section arrière (9), dans lequel le rapport entre une surface extérieure formée par la pointe de contact (3) dans la zone conique (11) et un rayon de la pointe de contact dans la section arrière (9) au point où se trouve la zone conique (11) de plus grand rayon est d'au moins 35 mm, de préférence d'au moins 40 mm, en particulier d'au moins 43 mm.
